Europäisches Patentamt

European Patent Office

Office européen des brevets

(19)

(11) Publication number: **0 210 742**
A2

# (12) EUROPEAN PATENT APPLICATION

(21) Application number: **86304771.8**

(22) Date of filing: **20.06.86**

(51) Int. Cl.⁴: **G 06 F 9/46**
**G 06 F 9/44**

(30) Priority: **21.06.85 US 747516**

(43) Date of publication of application:
**04.02.87 Bulletin 87/6**

(84) Designated Contracting States:
**DE FR GB NL**

(71) Applicant: **CAE SYSTEMS, INC.**
**5302 Betsy Ross Drive**
**Santa Clara California 95050(US)**

(72) Inventor: **Morris, Kevin C.**
**8929 Black Oak**
**Austin Texas 78729(US)**

(72) Inventor: **Weintraub, Steven R.**
**8709 Stillwood Drive**
**Austin Texas 78758(US)**

(74) Representative: **Burke, Steven David et al,**
**R.G.C. Jenkins & Co. 12-15, Fetter Lane**
**London EC4A 1PL(GB)**

(54) Method for controlling computer program execution sequences.

(57) A method for controlling computer program sequences
has a command shell with a set of programs and program
control files for use with the computer program sequences. A
sequencing program makes decisions as to which computer
program should be run next with which control file, and generates the job control language (JCL) to run it. A sequencing
text contains a strategy which the sequencing program uses
to decide which program control file combination to run. An
interactive monitor program helps submit and monitor a
sequence while it is running. The user prepares the design
input file and submits it with the aid of the monitor program.
The monitor program also checks and reports the completion
of the process and makes a final report. The sequence then
runs to completion or terminates in an error.

./...

MULTI-PROGRAM SYSTEM

| | |
|---|---|
| 10 | A |
| | B |
| | C |
| | D |
| | E |
| | F |

STRATEGY TEXT ──────┐        ┌────── PROCESS HISTORY

◁── SELECT PROGRAM
◁── (GENERATED JCL)

┌──────────┐
│ SEQUENCER │  12
└──────────┘

OUT PUT ──▷
(FEED BACK) ──▷

NEW PROCESS HISTORY

FIG. 1

## METHOD FOR CONTROLLING COMPUTER PROGRAM EXECUTION SEQUENCES

0210742

### Background of the Invention

#### Field of the Invention

The present invention relates to computer aided design, and more particularly to a method for controlling computer program execution sequences of a large, multi-program system.

#### Description of the Prior Art

Large multi-program systems, such as computer aided design systems, require user intervention after each program executes to decide on the next step. The computer aided design problem consists of two major portions - design and implementation. In computer aided design for VLSI circuits the implementation portion is further subdivided into partitioning the design into functional components, placing the functional components on a carrier, and routing connections between functional components. Each of these steps is again subdivided into phases, such as initial placement and improvement placement, which may involve several alternative choices depending upon the results of the previous step or phase. Deciding between these choices requires expert knowledge of the design system.

The objective of computer aided design is to provide a 100% automatic system to minimize expert human intervention and, thus, increase the speed of the process. Therefore, what is desired is a knowledge-based, automatic control of a large, multi-program system which allows the user to use the system without having to learn the complexities of it.

## Summary of the Invention

Accordingly, the present invention provides a method for controlling computer program sequences. A command shell has a set of programs and program control files for use with the computer program sequences. A sequencing program makes decisions as to which computer program should be run next with which control file, and generates the job control language (JCL) to run it. A sequencing text contains a strategy which the sequencing program uses to decide which program/control file combination to run. An interactive monitor program helps submit and monitor a sequence while it is running. The user prepares the design input files and submits it with the aid of the monitor program. The monitor program also checks and reports the completion of the process and makes a final report. The sequence then runs to completion or terminates in an error.

Objects, advantages and other novel features of the present invention will be apparent from the following detailed description when read in conjunction with the appended claims and attached drawing.

## Brief Description of the Drawing

Fig. 1 is a block diagram view of a multi-program system with a command shell according to the present invention.

Fig. 2 is a flow chart view of the sequence program for the command shell according to the present invention.

## Description of the Preferred Embodiment

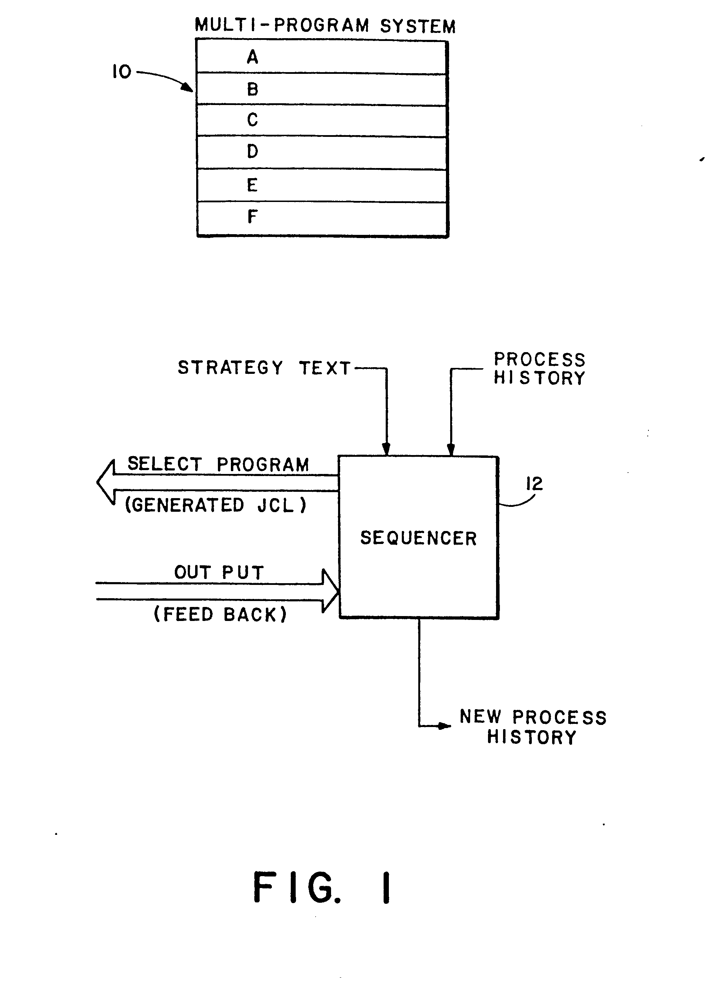

Referring now to Fig. 1 a multi-program system 10 is shown having a plurality of programs, A through F for illustration. The command shell has a sequencer 12 which interacts with the multi-program system 10 to select the next program to execute based upon the output of previous programs run.

The sequencer 12 is designed to control the multi-program system 10. The multi-program system 10 comprises many independent programs each of which performs a different operation on a standard format design file. Each subsystem, or independent program, can be run with various control options so that each combination of a subsystem and a control file comprises a logically unique operation on the design file. The starting design file is created by the user, either by hand or by using an external tool. This design file is sent through an initial subsystem, after which the other subsystems can be executed in various orders and configurations depending on the type of problem being solved.

To control this multi-program system 10 the sequencer 12 runs a subsystem, evaluates the result of that run, and decides which subsystem/control file configuration to execute next. The criteria for evaluating the results of a run, and what to do based on that evaluation, are variable because different classes of problems require different overall strategies. The sequencer 12 also has the capability to evaluate the results of earlier steps in the process and compare various results parameters from different runs. Thus the sequencer 12 implements a rule based expert system as a finite state machine.

Each possible design step is represented by a single node on a state diagram. The results of that design step and the previous design steps determine which state is to be executed next. A single state diagram therefore represents all possible sequences of steps for a particular strategy. An expert user constructs the state diagram which starts with the first multi-program system subsystem as the initial state, and which has branches to various other subsystems depending on the status of the design or process. Once the complete state diagram with all contingencies is constructed, a machine readable state table is built for the sequencer 12 to use as a reference. Once this strategy file or strategy text, is created, the sequencer 12 can automatically make the same decisions as the expert user.

The strategy file breaks a process into individual states, each state representing a single program run. From each of these states flows any number of decision branches which specify conditions for executing other states. The sequencer 12 starts by assuming an initial state and running it. The sequencer 12 then looks at the output from that state and all previous states and compares it to the decisions that can be made. These might be, for a VLSI layout system, such factors as whether too many components were placed with a force fit method, too little improvement was made over several states, or simply whether a processing error occurred. With this information the sequencer 12 decides which state is to be run next, looks up the program specified by that state, and accesses all the information for running that program. The sequencer 12 then creates the job control language (JCL) for running that state, and exits to run that JCL. A typical execution looks like:

```
A:
Run sequencer (which creates JCL)
Run created JCL (Which runs selected program)
If not finished go to A:
```

This process stops when the sequencer 12 steers to a termination state or an abort state, at which point it generates JCL to stop the loop.

The user creates the design input file and submits it with the aide of a monitor program. The monitor program uses two pieces of JCL. One is a piece of JCL to run the sequencing program, and the other piece is created by the monitor program to submit the first JCL piece. The first piece of JCL that runs the sequence program is basically a loop that runs until processing is done, as described above. The first thing in the loop is a run of the sequence program that creates a piece of JCL that runs a subsystem. It runs this JCL, deletes it and loops back to the sequence program. The sequence program created piece of JCL does any needed assignments, then runs the subsystem, and finally deletes any requested files. If a termination is detected, the created JCL sets a flag to terminate the loop, and the sequencer JCL falls through the loop. The user can check the process at any time by entering the monitor program.

The piece of JCL that first runs the monitor (RUN MONITOR.EXE) creates a dummy JCL (SUBMIT DUMMY.JCL) to

submit a sequencer JCL where DUMMY.JCL looks like SUBMIT SEQUENCE.JCL. The sequence JCL first runs the sequencer which creates the JCL for running one state of the sequence.

```
DELETE DUMMY.JCL
FINISHED := FALSE
A:RUN SEQUENCE.EXE (creates 'TCA'DUMMY.JCL)
@'TCA'DUMMY.JCL
DELETE 'TCA'DUMMY.JCL
IF NOT FINISHED THEN GOTO A:
```

The 'TCA'DUMMY.JCL is a piece of JCL to run the state. It first makes any assignments that are needed, then runs the subsystem. Finally any files requested are then deleted.

```
ASSIGNMENTS (if any)
RUN SUBSYSTEM.EXE
DELETES (if any)
```

This goes on until a termination state is encountered when the sequence creates a dummy JCL to terminate the loop (FINISHED := TRUE). At this point the loop fails, and the user checks the design from the monitor program for completeness.

One central file contains informtion on the total history of the process running. This file allows generation of a master report, a central information source for current monitor information, and a history that the sequence program can use to make decisions. The file is made up of process history records and a text record in front containing the process identification, or three character acronym (TCA). The monitor program uses this file to gather information to return to the user. When the user starts a design process, the monitor program creates a history file with information for the first state to be run. With each state of the subsystem the sequence program reads in the complete history file, adding to this the information from the current state it reads from the design file. This information is then used to generate the next state. This set of information is output into a new processing history. At the termination of the complete processing run the monitor program uses this file to generate the final report.

The interactive monitor allows the user to have certain interactive control over the running job such as helping to submit the sequence and giving statistics on the current run. When the user invokes the monitor, it shows a global menu. Options on this menu include checking and starting a process. When the user wishes to check a process, the monitor requests the identification of the desired process. Then it fetches the design's processing history, reads it, and allows the user to access the file to get information on the process. If the user wishes to start a process, the monitor program asks for the information needed to start a process, creates the necessary JCL to run the sequence, exits and submits the generated JCL.

The sequencing program uses the sequence text to help it make its decisions on the next state and to help it generate the code for that state. The information for the state decision is in branch (BRA) records, and the information for code generation is in state (STA), system delete (SDL), system files (SFL),

system files (SFL), and file order (FIL) records. The BRA records start with a state (BRASTA) which is to be matched with the current state, and a subbranch number (BRASST) numbering the specific subbranch. Then there are three sets of numbers used for the decision making. All sets are tested for trueness. If all are not true, then the next subbranch of this state is checked. Otherwise the next state field of this line is checked to determine the next state, termination, or continuing check on next record.

After the next state is discovered by the BRA records, the sequencer reads through the STA records until the states are matched (STASTA). The information on this record contains the basic information needed to generate the JCL for the next state and subsystem to be run. Then generic file names are listed, and two additional fields tell if the line continues into the next record (STACON) and if files are to be deleted (STADEL). Default file names for the STA record are listed on the FIL records. If files are to be deleted, there is a matching SDL record. The SDL record has a state number to be matched and generic names of files to be deleted. The generic names are looked up in the SFL record which matches the generic name with that of its true system name.

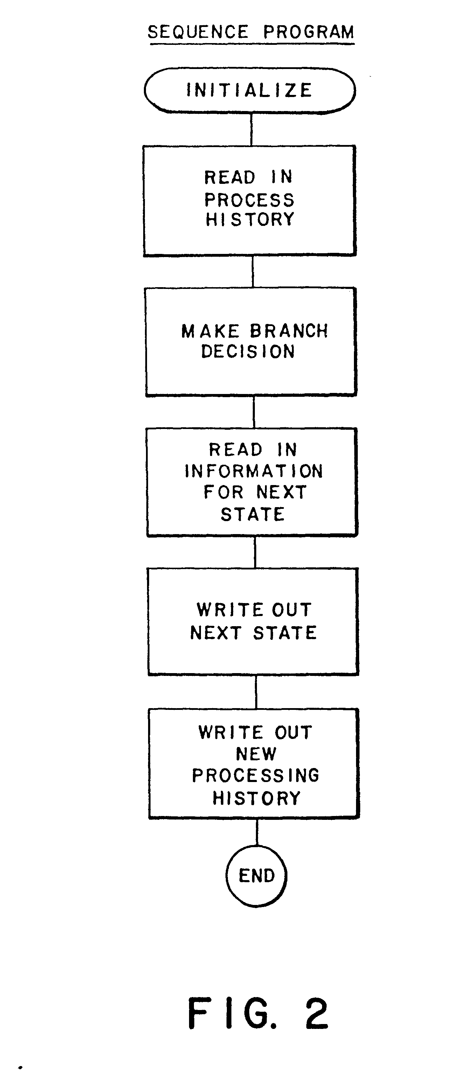

Referring now to Figs. 2 and Appendices I and II, a more detailed design for the present invention is shown as a specific embodiment. Appendix I is the pseudo-code for the sequence program together with a description of related record files, and Appendix II is a listing of the actual significant portions of the sequence program. The system and design file are cleared and loaded, and a processing history array (TABLE) is initialized. The master file is opened and the processing history records are stored in TABLE. The current design file is opened and a processing history record is stored also in TABLE. The design file is then closed and the state is set equal to the processing history state for the record from the current design file.

Now branch records are read until the record equivalent to the current state is found. The information in that branch record is processed to determine the next state to run.

The state records are then accessed to find the record corresponding to the next state to be run, and the subsystem to be run and a delete indicator are determined. The list of files to be used is stored in a temporary array TEMP. The file order records are read until the appropriate record corresponding to the subsystem to be run is located. A file table FILETABLE is created from the file order record or records. The delete indicator is checked, and if set the appropriate delete record(s) are entered into FILETABLE. Output and report default equivalent files are read in also. Now FILETABLE is updated with the true generic names and sorted. Then the processing history is rewound and the new processing history is written back into the master file from TABLE. A processing history record is also written for the next state, and the processing history is closed.

Finally, the JCL and data for the subsystem to be run is generated, and the sequence program exits to run the JCL.

Thus, the present invention provides a command shell in the form of an expert system that processes information through a larger multi-program system.

CLAIMS:

1.  A method for processing information through a multi-program system comprising the steps of:

submitting a design input file which defines sequencing strategies;

creating a piece of job control language to run a subsystem of said multi-program system;

running said subsystem with said job control language; and

looping through said creating and running steps until processing is completed.

2.  A method as recited in claim 1 wherein said creating step comprises the steps of:

reading in a processing history;

making a branch decision to select said subsystem based upon said sequence strategies and said processing history;

writing out a new processing history;

reading in state information data for said subsystem; and

generating said job control language based upon said state information data.

3.  A computer having means for processing information in accordance with the method of claim 1 or claim 2.

MULTI-PROGRAM SYSTEM

| A |
|---|
| B |
| C |
| D |
| E |
| F |

10

STRATEGY TEXT

PROCESS HISTORY

SELECT PROGRAM

(GENERATED JCL)

SEQUENCER

12

OUT PUT

(FEED BACK)

NEW PROCESS HISTORY

# FIG. I

SEQUENCE PROGRAM    0210742

```
        ┌──────────────┐
        │  INITIALIZE  │
        └──────┬───────┘
        ┌──────┴───────┐
        │   READ IN    │
        │   PROCESS    │
        │   HISTORY    │
        └──────┬───────┘
        ┌──────┴───────┐
        │ MAKE BRANCH  │
        │   DECISION   │
        └──────┬───────┘
        ┌──────┴───────┐
        │   READ IN    │
        │ INFORMATION  │
        │  FOR NEXT    │
        │    STATE     │
        └──────┬───────┘
        ┌──────┴───────┐
        │  WRITE OUT   │
        │  NEXT STATE  │
        └──────┬───────┘
        ┌──────┴───────┐
        │  WRITE OUT   │
        │     NEW      │
        │ PROCESSING   │
        │   HISTORY    │
        └──────┬───────┘
            (  END  )
```

# FIG. 2